# EUROPEAN PATENT APPLICATION

(11) **EP 4 651 249 A1**
(43) Date of publication of application: **19.11.2025**
(21) Application number: 23934154.8
(22) Date of filing: 14.12.2023
(51) Int. Cl.: H01M 10/052, H01M 4/133, H01M 4/136, H01M 4/58, H01M 4/587, H01M 4/62, H01M 10/058

(54) **LITHIUM IRON PHOSPHATE ION BATTERY AND METHOD FOR MANUFACTURING LITHIUM IRON PHOSPHATE ION BATTERY**

(30) Priority: 17.04.2023 WO PCT/JP2023/015308
(71) Applicant: Nash Energy (I) Private Limited, Bangalore, Karnataka 560022 (IN); Nash Energy Japan LLC, Hanamaki-shi, Iwate 025-0312 (JP)
(72) Inventor: IGUCHI, Hirohumi, Hanamaki-Shi, Iwate 025-0312 (JP); HORIGOME, Masataka, Hanamaki-Shi, Iwate 025-0312 (JP)
(74) Representative: Plougmann Vingtoft a/s
(86) International application number: PCT/JP2023/044753
(87) International publication number: WO 2024/219014

(57) **Abstract**

With the present invention, the discharge energy of a lithium iron phosphate ion battery is increased. This method for manufacturing a lithium iron phosphate ion battery involves: a step of forming a positive electrode containing lithium, iron, phosphorus, and amorphous carbon; a step of forming a negative electrode containing graphite and amorphous carbon; and a step of putting the positive electrode, the negative electrode, and a predetermined electrolyte in a predetermined container and sealing the container. At least one of the amorphous carbon of the positive electrode and the amorphous carbon of the negative electrode has a carbon nanotube or a fullerene of 10 wt.% or less.

## Description

### TECHNICAL FIELD

The present invention relates to a lithium iron phosphate ion battery and a method for manufacturing the lithium iron phosphate ion battery.

### BACKGROUND OF THE INVENTION

Lithium ion batteries are known for their high energy density, rapid charge and discharge capabilities, and long expected lifespan. It is also known that lithium ion batteries can be constructed using various materials, such as ternary lithium ion batteries that utilize nickel, manganese, and cobalt as cathode material, and lithium iron phosphate ion batteries that utilize lithium iron phosphate (LFP: LiFePO₄) as the cathode material (for example, see Patent Document 1).

### PRIOR ART

### PATENT DOCUMENT

[Patent Document 1] Japanese Unexamined Patent Application Publication No. 2017-212045

### SUMMARY OF INVENTION

### PROBLEMS TO BE SOLVED BY THE INVENTION

A lithium iron phosphate ion battery can be constructed without using rare metals such as cobalt, unlike a ternary lithium ion battery, thereby reducing manufacturing cost. However, the lithium iron phosphate ion battery has the drawback of lower discharge energy compared to the ternary lithium ion battery.

The present invention has been made in view of these points, and its object is to enhance discharge energy of a lithium iron phosphate ion battery.

### MEANS FOR SOLVING THE PROBLEM

A first aspect of the present invention provides a method for manufacturing a lithium iron phosphate ion battery, including the steps of: forming a cathode that includes lithium, iron, phosphorus, and amorphous carbon; forming an anode that includes graphite and amorphous carbon; and enclosing the cathode, the anode, and a predetermined electrolyte in a predetermined container and hermetically sealing the container, wherein at least one of the amorphous carbon in the cathode or the amorphous carbon in the anode contains 10 wt% or less of fullerene or carbon nanotubes.

The forming of the cathode may include: applying to a substrate a cathode slurry containing cathode material that includes lithium iron phosphate and amorphous carbon, and drying the cathode slurry to form the cathode, and the amorphous carbon in the cathode material contains 10 wt% or less of the fullerene or the carbon nanotubes.

The forming of the anode may include: applying to a substrate an anode slurry containing anode material that includes graphite and amorphous carbon, and drying the anode slurry to form the anode, and the amorphous carbon in the anode material contains 10 wt% or less of the fullerene or the carbon nanotubes.

At least one of the amorphous carbon in the cathode or the amorphous carbon in the anode may contain 5 wt% or less of fullerene or carbon nanotubes.

The forming of the cathode may include: applying to a substrate a cathode slurry containing cathode material that includes lithium iron phosphate and amorphous carbon, and drying the cathode slurry to form the cathode, and the amorphous carbon in the cathode material contains 5 wt% or less of the fullerene or the carbon nanotubes.

The forming of the anode may include: applying to a substrate an anode slurry containing anode material that includes graphite and amorphous carbon, and drying the anode slurry to form the anode, and the amorphous carbon in the anode material contains 5 wt% or less of the fullerene or the carbon nanotubes.

A second aspect of the present invention provides a lithium iron phosphate ion battery including: a cathode that includes lithium, iron, phosphorus, and amorphous carbon; an anode that includes graphite and amorphous carbon; and an electrolyte, wherein at least one of the amorphous carbon in the cathode or the amorphous carbon in the anode contains 10 wt% or less of fullerene or carbon nanotubes.

At least one of the amorphous carbon in the cathode or the amorphous carbon in the anode may contain 5 wt% or less of fullerene or carbon nanotubes.

### EFFECT OF THE INVENTION

According to the present invention, an effect of increasing the discharge energy of a lithium iron phosphate ion battery can be achieved.

### BRIEF DESCRIPTION OF THE DRAWINGS

FIG. 1 shows an example of a schematic configuration of a lithium iron phosphate ion battery 10 according to the present embodiment.
FIG. 2 shows an example of a manufacturing flow of the lithium iron phosphate ion battery 10 according to the present embodiment.
FIG. 3 shows a configuration example of the lithium iron phosphate ion battery 10 according to the present embodiment.
FIG. 4 shows an example of an assembly flow of the lithium iron phosphate ion battery 10 according to the present embodiment.
FIG. 5 shows the results of high-performance liquid chromatography analysis of the conductive additive in the lithium iron phosphate ion battery 10 according to the present embodiment.
FIG. 6 shows a first example of charge-discharge characteristics of the lithium iron phosphate ion battery 10 according to the present embodiment.
FIG. 7 shows a second example of the charge-discharge characteristics of the lithium iron phosphate ion battery 10 according to the present embodiment.
FIG. 8 shows an example of the charge-discharge cycle characteristics of the lithium iron phosphate ion battery 10 according to the present embodiment.
FIG. 9 shows an example of the charge-discharge characteristics of a second comparative example.
FIG. 10 shows an example of the charge-discharge cycle characteristics of the second comparative example.

### DETAILED DESCRIPTION OF THE INVENTION

### <Schematic configuration of a lithium iron phosphate ion battery 10 >

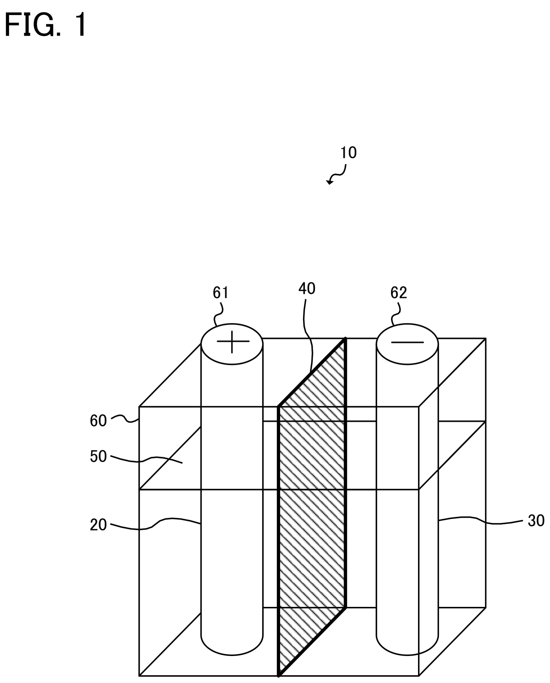

FIG. 1 shows an example of a schematic configuration of a lithium iron phosphate ion battery 10 according to the present embodiment. The lithium iron phosphate ion battery 10 is a rechargeable secondary battery. The lithium iron phosphate ion battery 10 includes a cathode 20, an anode 30, a separator 40, an electrolyte 50, and a housing 60.

The cathode 20 includes lithium, iron, phosphorus, and amorphous carbon. The active material of the cathode 20 is lithium iron phosphate. The cathode 20 is an electrode formed of, for example, lithium iron phosphate, amorphous carbon, and a binder such as PVDF (Poly Vinylidene Difluoride), as cathode material. Here, amorphous carbon is a conductive additive such as Ketjen Black or acetylene black. The conductive additive is a material used to reduce the resistance of the electrode when the electrode of the lithium ion battery is formed.

The anode 30 includes graphite and amorphous carbon. The active material of the anode 30 is graphite. The anode 30 is an electrode formed of, for example, amorphous carbon, a thickener such as CMC (Carboxymethyl Cellulose), or a binder such as SBR (Styrene-Butadiene Rubber), as anode material.

The separator 40 allows lithium ions to move between the cathode 20 and the anode 30 while separating the cathode 20 and the anode 30. The separator 40 is, for example, a film having a thickness of about several ten µm and having a plurality of through holes of 1 µm or less. The separator 40 is formed of, for example, polyethylene, polypropylene, or the like.

The electrolyte 50 ionizes lithium into cations and anions, allowing ions to migrate. The electrolyte 50 is a solvent, a solution, a gel-like substance, or the like. The electrolyte 50 is, for example, an organic electrolytic solution in which approximately 1 mol of a lithium salt (LiPF₆, LiBF₄, LiClO₄, or the like) is dissolved in an organic solvent. Examples of the materials of the organic solvent include ethylene carbonate (EC), propylene carbonate (PC), dimethyl carbonate (DMC), diethyl carbonate (DEC), and ethyl methyl carbonate (EMC).

The housing 60 contains the cathode 20, the anode 30, the separator 40, and the electrolyte 50. The housing 60 is preferably a container that hermetically seals the cathode 20, the anode 30, the separator 40, and the electrolyte 50. The housing 60 includes a positive terminal 61 electrically connected to the cathode 20 and a negative terminal 62 electrically connected to the anode 30.

The lithium iron phosphate ion battery 10 is charged when a power source is connected to the positive terminal 61 and the negative terminal 62. When the lithium iron phosphate ion battery 10 is charged, electrons migrate from the cathode 20 to the anode 30, and lithium ions migrate through the electrolyte 50 from the cathode 20 and are accumulated in the anode 30, thereby generating a potential difference between the cathode 20 and the anode 30.

On the other hand, the lithium iron phosphate ion battery 10 discharges when a discharge circuit, such as a load, is connected to the positive terminal 61 and the negative terminal 62. When the lithium iron phosphate ion battery 10 is discharged, electrons flow from the anode 30 to the cathode 20 through the discharge circuit, and the lithium ions that had been accumulated in the anode 30 migrate to the cathode 20 through the electrolyte 50, and combine with the electrons in the cathode 20 to be reduced to lithium oxide.

In the lithium iron phosphate ion battery 10 according to the present embodiment, the discharge energy is improved by including fullerene or carbon nanotubes in at least one of the cathode 20 or the anode 30. For example, the lithium iron phosphate ion battery 10 contains 5 wt% or less of fullerene or carbon nanotubes in at least one of amorphous carbon in the cathode 20 or amorphous carbon in the anode 30. Here, the fullerene may have a C60 structure, or may instead have a C70 structure. The fullerene may also be a mixture of a fullerene having a C60 structure and a fullerene having a C70 structure.

In this way, the inventors have found that the electrical resistance of the electrode functions so as to be further reduced when only an appropriate amount of fullerene or carbon nanotubes is included in the conductive additive. In other words, the inventors have found that when an appropriate amount of fullerene or carbon nanotubes is included in the conductive additive, the discharge energy of the lithium iron phosphate ion battery 10 is increased.

The amount of fullerene or carbon nanotubes is, for example, 1 wt% or more and 5 wt% or less relative to the amorphous carbon in the electrode. The amount of fullerene or carbon nanotubes may be 2 wt% or more and 4 wt% or less, or 2.5 wt% or more and 3.5 wt% or less relative to the graphite of the electrode. Next, a method of manufacturing such a lithium iron phosphate ion battery 10 will be described.

### <Manufacturing flow of the lithium iron phosphate ion battery 10>

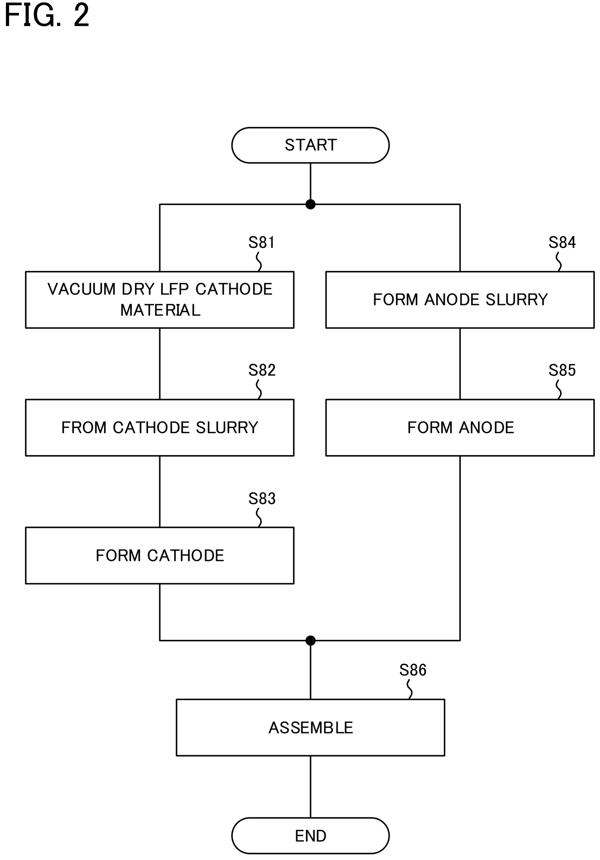

FIG. 2 shows an example of a manufacturing flow of the lithium iron phosphate ion battery 10 according to the present embodiment. In the present embodiment, a coin-type battery is described as an example of the lithium iron phosphate ion battery 10.

First, a cathode 20 and an anode 30 are formed. The cathode 20 and the anode 30 are formed separately, for example. The cathode 20 and the anode 30 may be formed concurrently in time or may be formed at different times. For example, the anode 30 may be formed after the cathode 20, or alternatively, the cathode 20 may be formed after the anode 30. FIG. 2 shows an example in which the cathode 20 and the anode 30 are formed concurrently in time.

First, the formation of the cathode 20 including lithium, iron, phosphorus, and amorphous carbon will be described. As an example of the film composition of the cathode 20, the weight ratio of lithium iron phosphate, amorphous carbon, and PVDF is 91:4:5. The amorphous carbon in the cathode material contains 5 wt% or less of fullerene or carbon nanotubes. In the present embodiment, it is assumed that 3 wt% of fullerene is added to the amorphous carbon.

More specifically, first, the LFP cathode material composed of lithium, iron, and phosphorus is vacuum dried (S81). For example, the LFP cathode material is placed in a vacuum chamber or the like, and dried by evacuating the chamber with a vacuum pump and then maintaining the material at a temperature of about 200°C for approximately five hours.

Next, a cathode slurry is formed (S82) by adding the dried LFP cathode material and amorphous carbon containing fullerene to a solution in which PVDF has been dissolved in a solvent such as N-methyl pyrrolidone (NMP), and to which a dispersant has been added, and stirring the resulting mixture. The amount of the dispersant is, for example, about 2 wt% relative to the cathode material. Then, NMP is added to the cathode slurry and stirred so that the cathode slurry reaches a predetermined concentration. The predetermined concentration is, for example, a solid content of 45 wt%.

Next, the cathode 20 is formed (S83) by applying to a substrate a cathode slurry containing cathode material that includes lithium iron phosphate and amorphous carbon, and drying the cathode slurry. The substrate is, for example, aluminum foil whose surface is coated with graphite. The film thickness of the graphite is, for example, approximately 1 µm, and the thickness of the aluminum foil is approximately 12 µm. It is preferable to apply only the predetermined amount of the cathode slurry to the substrate so as to form a predetermined dry film thickness. The predetermined dry film thickness is, for example, approximately 80 µm. The cathode slurry is preferably applied by a slot die coater or the like.

The applied cathode slurry is dried, for example, in air at a temperature of approximately 110°C for about 15 minutes to form a coating film of the cathode material having a dry film thickness. Then, the coating film of the cathode material is pressed and formed to a predetermined thickness. The predetermined thickness is, for example, approximately 70 µm. The cathode 20 is formed by cutting the coating film of the cathode material, having such a predetermined thickness, into a predetermined shape.

Next, the formation of the anode 30 including graphite and amorphous carbon will be described. As an example of the film composition of the anode 30, the weight ratio of graphite, amorphous carbon, CMC, and SBR is 93.5:2.5:2:2. The amorphous carbon is Ketjen Black, acetylene black, or the like. The amorphous carbon in the anode material contains 5 wt% or less of fullerene or carbon nanotubes. In the present embodiment, it is assumed that 3 wt% of fullerene is added to amorphous carbon.

More specifically, first, an anode slurry is formed (S84). For example, a predetermined amount of graphite powder and a predetermined amount of amorphous carbon are added to an aqueous solution of CMC, and the resulting mixture is stirred. A predetermined amount of SBR solution is then added thereto and stirred to form the anode slurry. The aqueous solution of CMC contains, as one example, 2 wt% of CMC. Then, distilled water is added to the anode slurry and the resulting mixture is stirred so that the anode slurry reaches a predetermined concentration. The predetermined concentration is, for example, a solid content of 40 wt%.

Next, the anode 30 is formed (S85) by applying to a substrate an anode slurry containing anode material that includes graphite and amorphous carbon, and drying the anode slurry. The substrate is, for example, copper foil whose surface is coated with carbon nanotubes. The film thickness of the carbon nanotubes is, for example, approximately 1 µm, and the thickness of the copper foil is approximately 6 µm. It is preferable to apply only the predetermined amount of the anode slurry to the substrate so as to form a predetermined dry film thickness. The predetermined dry film thickness is, for example, approximately 80 µm. The anode slurry is preferably applied by a slot die coater or the like.

The applied anode slurry is dried, for example, in air at a temperature of approximately 80°C for about 10 minutes to form a coating film of the anode material having a dry film thickness. Then, the coating film of the anode material is pressed and formed to a predetermined thickness. The predetermined thickness is, for example, approximately 60 µm. The anode 30 is formed by cutting the coating film of the anode material, having such a predetermined thickness, into a predetermined shape.

After the cathode 20 and the anode 30 are formed, the cathode 20, the anode 30, and the predetermined electrolyte 50 are enclosed in a predetermined container, and the container is hermetically sealed to assemble the lithium iron phosphate ion battery 10 (S86). Thus, the lithium iron phosphate ion battery 10 can be formed.

### <Configuration example of the lithium iron phosphate ion battery 10 >

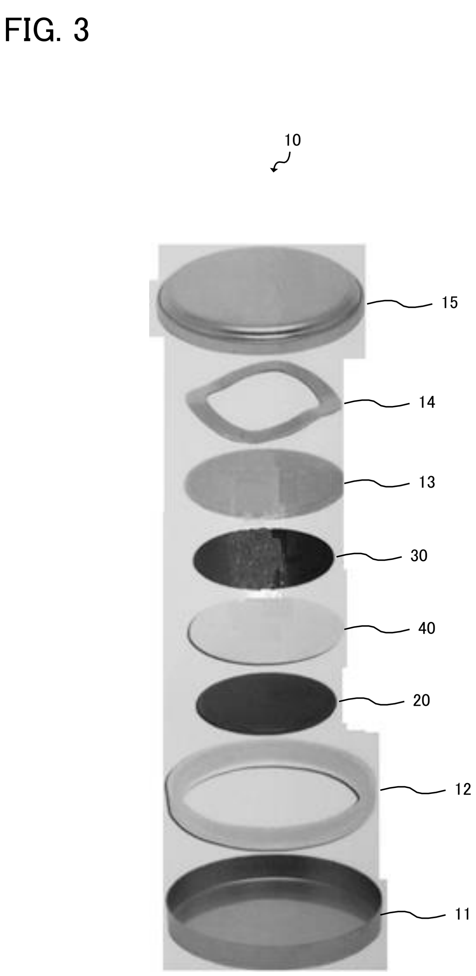

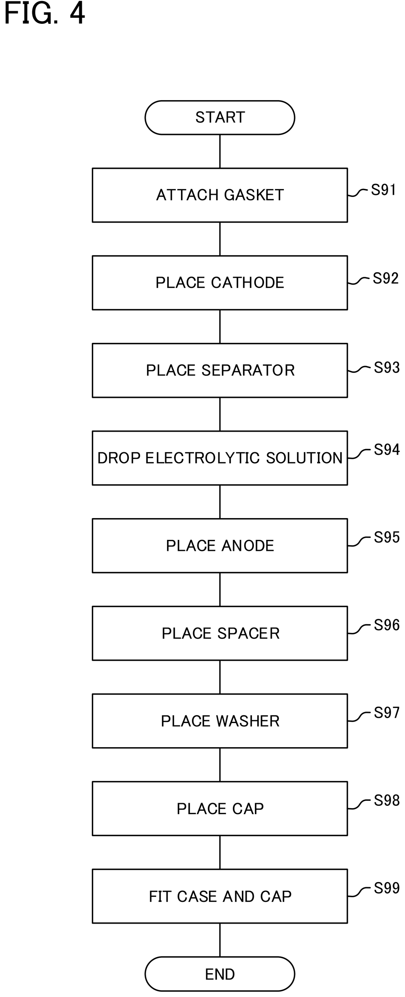

FIG. 3 shows a configuration example of the lithium iron phosphate ion battery 10 according to the present embodiment. FIG. 4 shows an example of an assembly flow of the lithium iron phosphate ion battery 10 according to the present embodiment. In other words, FIGS. 3 and 4 are diagrams illustrating, in detail, the operation of S86 of assembling the lithium iron phosphate ion battery 10 described in FIG. 2.

The lithium iron phosphate ion battery 10 further includes a case 11, a gasket 12, a spacer 13, a washer 14, and a cap 15. The housing 60 is formed by fitting together the case 11 and the cap 15. Before the lithium iron phosphate ion battery 10 is assembled, it is preferable that the cathode 20 and the anode 30 be dried using a vacuum chamber or the like. In this case, for example, the cathode 20 is dried at approximately 110°C for about 8 hours, and the anode 30 is dried at approximately 90°C for about 8 hours. The separator 40 is assumed to have been cut into a predetermined shape.

First, the gasket 12 is attached to the case 11 (S91). Next, the cathode 20 is placed in the case 11 (S92). Next, the separator 40 is placed on the cathode 20 in the case 11 (S93). Next, a predetermined amount of electrolytic solution is dropped onto the separator 40 in the case 11 by a pipette or the like (S94). The electrolytic solution is, for example, an organic electrolytic solution in which approximately 1 mol of a lithium salt (LiPF₆) is dissolved in EC, DMC, and EMC at a weight ratio of 1:1:1. It is preferable that the electrolytic solution be dropped in such that the cathode 20, the anode 30, and the separator 40 are immersed in the electrolytic solution.

Next, the anode 30 is placed on the separator 40 containing the electrolytic solution (S95). Next, the spacer 13 is placed on the anode 30 in the case 11 (S96). Next, the washer 14 is placed on the spacer 13 in the case 11 (S97). Next, the cap 15 is placed on the gasket 12 attached to the case 11 (S98). Next, the cap 15 is pressed from above, and the case 11 and the cap 15 are fitted together via the gasket 12 (S99).

As a result, the lithium iron phosphate ion battery 10 can be assembled. It is preferable that the assembly operation of S91 to S99 be performed in an argon atmosphere or a dry atmosphere having a moisture dew point of -50°C or below. The characteristics of the lithium iron phosphate ion battery 10 formed as described above will be described.

### <Examples of characteristics of the lithium iron phosphate ion battery 10>

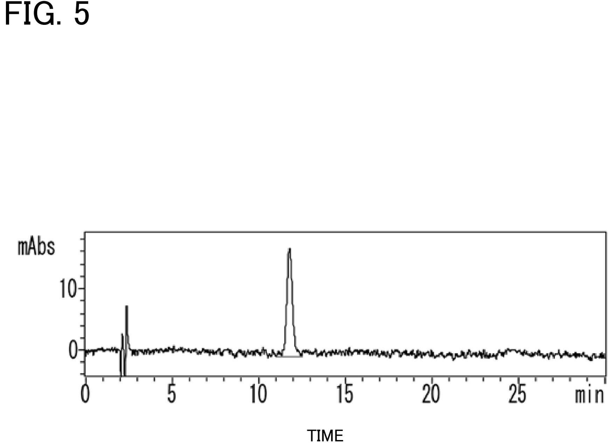

FIG. 5 shows the results of high-performance liquid chromatography (HPLC) analysis of the conductive additive (amorphous carbon) in the lithium iron phosphate ion battery 10 according to the present embodiment. FIG. 5 shows the results of HPLC analysis of a solution obtained by dissolving 2.1 mg of amorphous carbon in 5 ml of the solvent o-DCB (ortho-dichlorobenzene) and filtering the turbid solution through a 0.2 µm filter. From the comparison of the peak area values of the analysis results, the content of fullerene C60 and fullerene C70 contained in the amorphous carbon can be estimated to be approximately 3.5%.

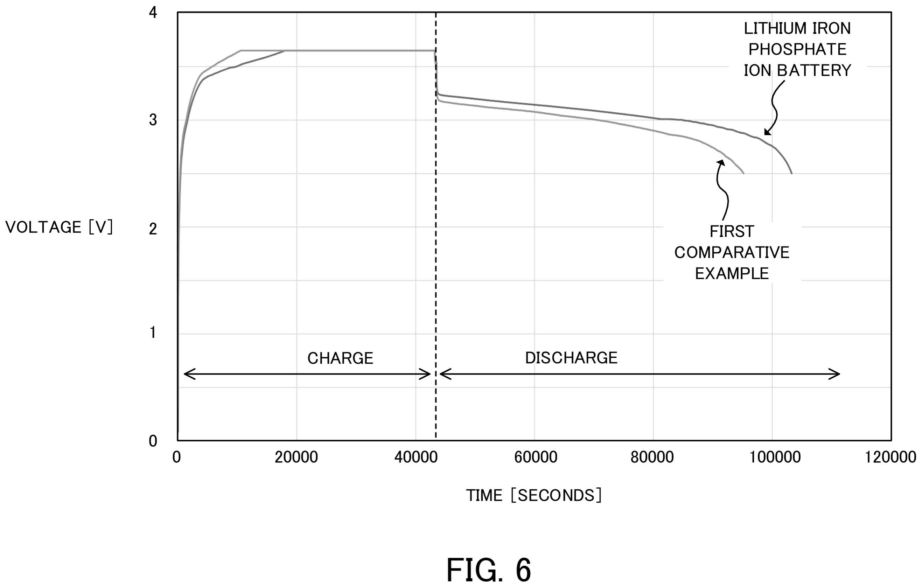

FIG. 6 shows a first example of the charge-discharge characteristics of the lithium iron phosphate ion battery 10 according to the present embodiment. FIG. 6 shows the charge-discharge characteristics of the lithium iron phosphate ion battery 10 manufactured by the manufacturing flow and assembly flow described in FIGS. 2 to 4. In FIG. 6, the horizontal axis represents time, and the vertical axis represents voltage. For comparison, FIG. 6 shows the characteristics of a lithium iron phosphate ion battery in which fullerene and carbon nanotubes are not included in amorphous carbon, as a "first comparative example". In other words, the first comparative example is a conventional lithium iron phosphate ion battery.

In FIG. 6, a time point at which about 12 hours (43200 seconds) have elapsed is indicated by a dotted line. FIG. 6 shows the result of charging the lithium iron phosphate ion battery 10 and the first comparative example from 0 to about 12 hours on the time axis, and the result of discharging the lithium iron phosphate ion battery 10 and the first comparative example after about 12 hours have elapsed. FIG. 6 shows that the discharge time of the lithium iron phosphate ion battery 10 according to the present embodiment is increased by approximately 20% compared with that of the first comparative example. From this, it can be seen that the lithium iron phosphate ion battery 10 can exhibit a discharge energy of approximately 20% higher than that of the conventional lithium iron phosphate ion battery.

### <Examples of fullerene or carbon nanotubes greater than 5 wt%>

In the lithium iron phosphate ion battery 10 according to the present embodiment described above, an example has been described above in which at least one of the cathode 20 or the anode 30 contains 5 wt% or less of fullerene or carbon nanotubes, however the present embodiment is not limited thereto. The amount of fullerene or carbon nanotubes may be greater than 5 wt% relative to the amorphous carbon in the electrode. At least one of the amorphous carbon in the cathode 20 or the amorphous carbon in the anode 30 contains, for example, 10 wt% or less of fullerene or carbon nanotubes.

In this case, for example, the amorphous carbon in the cathode material contains 10 wt% or less of fullerene or carbon nanotubes. Alternatively or additionally, the amorphous carbon in the anode material may contain 10 wt% or less of fullerene or carbon nanotubes.

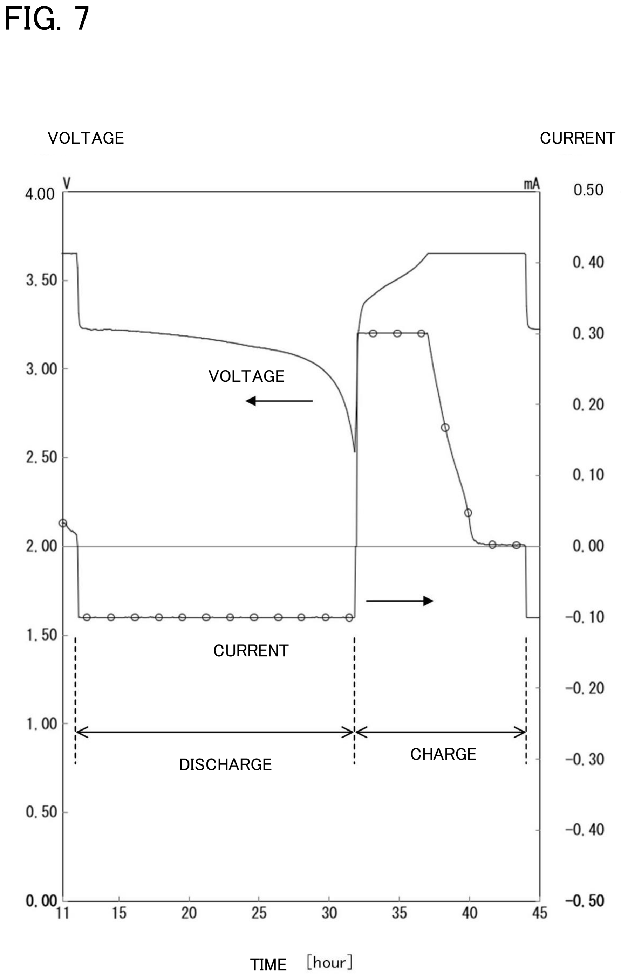

FIG. 7 shows a second example of the charge-discharge characteristics of the lithium iron phosphate ion battery 10 according to the present embodiment. FIG. 7 shows the charge-discharge characteristics of a lithium iron phosphate ion battery 10 manufactured by adding 10 wt% of fullerene to amorphous carbon in the cathode material and 10 wt% of fullerene to amorphous carbon in the anode material, and using the manufacturing and assembly flows described in FIGS. 2 to 4.

It can be seen from FIG. 7 that the lithium iron phosphate ion battery 10 containing 10 wt% of fullerene in the cathode 20 and the anode 30 can have a discharge energy of approximately 20% higher than that of the conventional lithium iron phosphate ion battery, similarly to the result of FIG. 6.

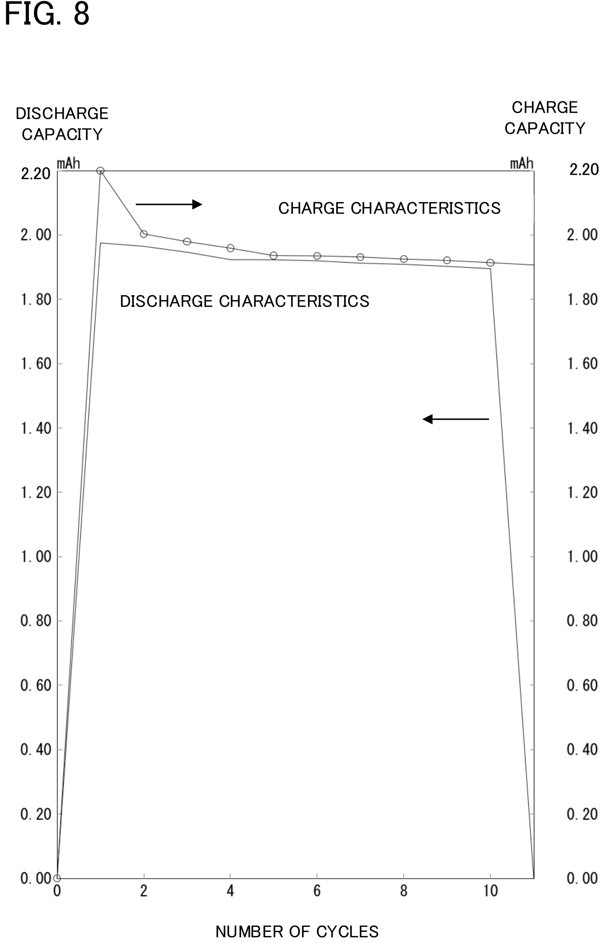

FIG. 8 shows an example of the charge-discharge cycle characteristics of the lithium iron phosphate ion battery 10 according to the present embodiment. The charge-discharge cycle characteristics represent the results of plotting the discharge capacity and charge capacity at the end of each cycle, while repeating the charge-discharge cycle as shown in FIG. 7. From FIG. 8, it can be seen that the lithium iron phosphate ion battery 10 sufficiently functions as a rechargeable battery.

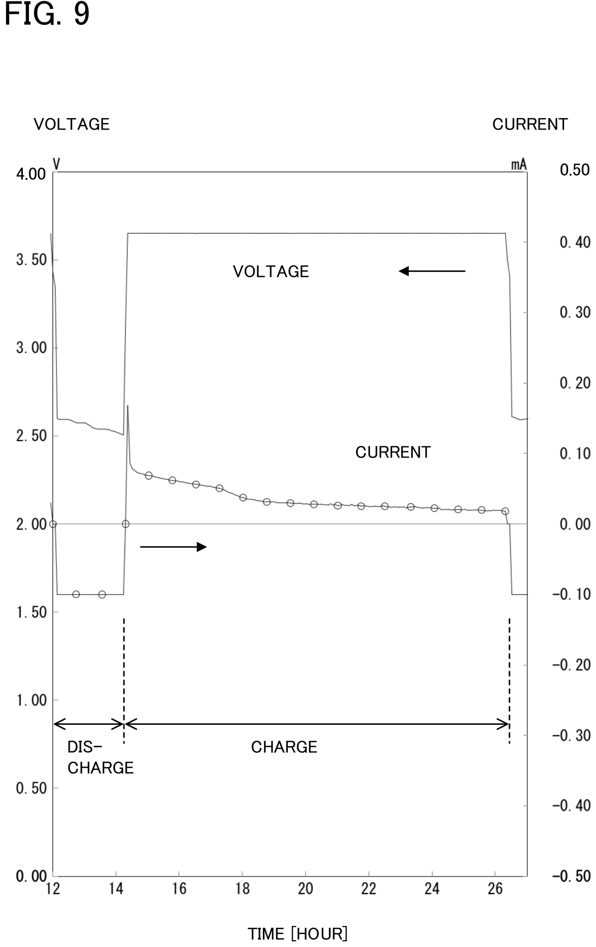

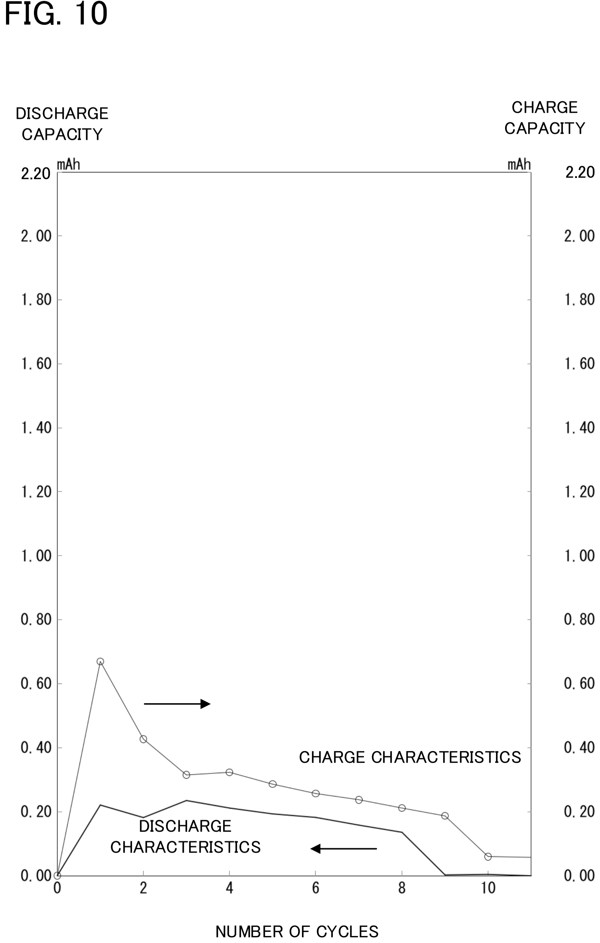

FIGS. 9 and 10 show the characteristics of a second comparative example. The second comparative example is a lithium iron phosphate ion battery in which the mixing ratio of fullerene is 100 wt%. In other words, the second comparative example is a lithium iron phosphate ion battery in which fullerene is used in place of amorphous carbon in both the cathode material and the anode material.

FIG. 9 shows an example of the charge-discharge characteristics of the second comparative example. It can be seen that the second comparative example exhibits a low discharge capacity and an undesirably steep rise in charge voltage. FIG. 10 shows an example of the charge-discharge cycle characteristics of the second comparative example. In the second comparative example, the discharge capacity and the charge capacity were lower than those of the lithium iron phosphate ion battery 10.

It can be seen from FIGS. 9 and 10 that the second comparative example functions more as a capacitor than a battery. This may be because the electrical conductivity (or ionic conductivity) of fullerene is low, causing a decrease in the ionic conductivity within the active material and reducing the function as a battery. Therefore, it is understood that the discharge energy of the lithium iron phosphate ion battery 10 can be increased by including an appropriate amount, such as 10 wt% or less, of fullerene or carbon nanotubes in the conductive additive.

The lithium iron phosphate ion battery 10 according to the present embodiment has been described as an example involving the manufacture of a coin-type battery, but the present embodiment is not limited thereto. Other structures may be used, provided that the lithium iron phosphate ion battery 10 employs the cathode 20 and/or the anode 30 in which a predetermined amount of fullerene or carbon nanotubes is included in the conductive additive.

The present disclosure is explained based on the exemplary embodiments. The technical scope of the present disclosure is not limited to the scope explained in the above embodiments and it is possible to make various changes and modifications within the scope of the disclosure. For example, all or part of the apparatus can be configured with any unit which is functionally or physically dispersed or integrated. Further, new exemplary embodiments generated by arbitrary combinations of them are included in the exemplary embodiments. Further, effects of the new exemplary embodiments brought by the combinations also have the effects of the original exemplary embodiments.

### [Description of Symbols]

- 10: Lithium iron phosphate ion battery
- 11: Case
- 12: Gasket
- 13: Spacer
- 14: Washer
- 15: Cap
- 20: Cathode
- 30: Anode
- 40: Separator
- 50: Electrolyte
- 60: Housing
- 61: Positive terminal
- 62: Negative terminal

## Claims

1. A method for manufacturing a lithium iron phosphate ion battery, comprising the steps of:
forming a cathode that includes lithium, iron, phosphorus, and amorphous carbon;
forming an anode that includes graphite and amorphous carbon; and
enclosing the cathode, the anode, and a predetermined electrolyte in a predetermined container and hermetically sealing the container, wherein at least one of the amorphous carbon in the cathode or the amorphous carbon in the anode contains 10 wt% or less of fullerene or carbon nanotubes.

2. The method for manufacturing the lithium iron phosphate ion battery according to claim 1, wherein the forming of the cathode includes:
applying to a substrate a cathode slurry containing cathode material that includes lithium iron phosphate and amorphous carbon, and drying the cathode slurry to form the cathode, and
the amorphous carbon in the cathode material contains 10 wt% or less of the fullerene or the carbon nanotubes.

3. The method for manufacturing the lithium iron phosphate ion battery according to claim 1 or 2, wherein the forming of the anode includes:
applying to a substrate an anode slurry containing anode material that includes graphite and amorphous carbon, and drying the anode slurry to form the anode, and
the amorphous carbon in the anode material contains 10 wt% or less of the fullerene or the carbon nanotubes.

4. The method for manufacturing the lithium iron phosphate ion battery according to claim 1, wherein at least one of the amorphous carbon in the cathode or the amorphous carbon in the anode contains 5 wt% or less of fullerene or carbon nanotubes.

5. The method of manufacturing the lithium iron phosphate ion battery according to claim 4, wherein the forming of the cathode includes:
applying to a substrate a cathode slurry containing cathode material that includes lithium iron phosphate and amorphous carbon, and drying the cathode slurry to form the cathode, and
the amorphous carbon in the cathode material contains 5 wt% or less of the fullerene or the carbon nanotubes.

6. The method for manufacturing the lithium iron phosphate ion battery according to claim 4 or 5, wherein the forming of the anode includes:
applying to a substrate an anode slurry containing anode material that includes graphite and amorphous carbon, and drying the anode slurry to form the anode, and
the amorphous carbon in the anode material contains 5 wt% or less of the fullerene or the carbon nanotubes.

7. A lithium iron phosphate ion battery comprising:
a cathode that includes lithium, iron, phosphorus, and amorphous carbon;
an anode that includes graphite and amorphous carbon; and
an electrolyte, wherein at least one of the amorphous carbon in the cathode or the amorphous carbon in the anode contains 10 wt% or less of fullerene or carbon nanotubes.

8. The lithium iron phosphate ion battery according to claim 7, wherein at least one of the amorphous carbon in the cathode or the amorphous carbon in the anode contains 5 wt% or less of fullerene or carbon nanotubes.
